# EUROPEAN PATENT SPECIFICATION

(11) **EP 3 729 321 B1**
(45) Date of publication and mention of the grant of the patent: **28.05.2025**
(21) Application number: 18891666.2
(22) Date of filing: 21.12.2018
(51) Int. Cl.: G06F 21/62, G06F 21/60, G06F 21/34

(54) **SECURE END-TO-END PERSONALIZATION OF SMART CARDS**
SICHERE END-ZU-END-PERSONALISIERUNG VON CHIPKARTEN
PERSONNALISATION DE BOUT EN BOUT SÉCURISÉE DE CARTES À PUCE

(30) Priority: 21.12.2017 US 201715851326
(43) Date of publication of application: 28.10.2020
(73) Proprietor: Entrust Corporation, Shakopee, MN 55379-3819 (US)
(72) Inventor: BIEHLMANN, Christophe, Shakopee, MN 55379-3817 (US)
(74) Representative: Carangelo, Pierluigi
(86) International application number: PCT/US2018/067305
(87) International publication number: WO 2019/126760

(56) References cited:
- WO-A2-2007/087432
- US-A1- 2003 111 528
- US-A1- 2009 065 325
- US-A1- 2009 185 687
- US-A1- 2011 166 999
- US-A1- 2015 215 121
- US-A1- 2016 226 662
- US-B1- 6 367 011

## Description

### TECHNICAL FIELD

The present disclosure relates generally to smart card programming. In particular, the present disclosure relates to secure personalization of smart cards.

### BACKGROUND

A personalization system, such as a smart card printer, may support personalization of a smart card, such as a multi-application IC card, in addition to performing a regular "printing" (e.g., image printing) operation. Personalization of smartcard application data is accomplished, in many cases, by sequential exchange of Application Protocol Data Units (APDUs), via a smartcard reader, between an external personalization system (software application) and the IC card. When the personalization system personalizes IC cards over the internet/network, the personalization system faces many challenges. For example, network and system performance, network reliability, and end-to-end security must be considered to ensure that such smart cards are personalized accurately and rapidly.

For example, in many instances, smart card personalization requires iterative communication with a smart card, for example for authentication and acquisition of encryption keys, followed by communication sequences between a personalization system and a smart card to exchange APDUs, sometimes to program Application Load Units (ALUs) onto the smart card. In instances where many smart cards are issued concurrently or sequentially, or where a personalization system is located remotely from the smart card printer, it is possible that network traffic may cause a delay in communication of data between a personalization system and the smart card. Furthermore, because the issuance system requires encryption keys of the smart card to form the ALUs or to complete the APDU exchange required for programming, the rate at which smart cards can be personalized is limited by not only data exchange rates/bandwidth issues, but also a rate at which the personalization system is capable of generating data to be stored on a card, which typically happens concurrently with personalization of the smart card. Additionally, because key exchange is required for formation of APDUs, smart card keys may be transmitted over the Internet, in the case of a remote personalization system, causing further security concerns. Additionally, if network communication is interrupted for some reason, programming of smart cards will fail.

US 2009/185687 A1 describes a system and method for securely personalizing a smart card.

For these and other reasons, improvements in mechanisms for personalization of smart cards are desirable.

### SUMMARY

In general, the present disclosure relates to secure personalization of smart cards. In some aspects, a customized dataset used for programming a smart card can be created using a virtual smart card, and secured for communication with the card issuance device using a device-specific encryption key. At the card issuance device, the customized dataset can be decrypted and used to personalize the real smart card.

In a first aspect, a method of personalizing a smart card is disclosed. The method includes generating, at a personalization system, a customized dataset including personalization data for installation onto a smart card, the customized dataset being generated based on an operating system of the smart card by performing a personalization process using a virtual smart card formatted according to the operating system, and encrypting at least a portion of the customized dataset, at a personalization system, using an encryption key that is associated with a card issuance device that is separate from the personalization system, the encryption key being different from any encryption key used to secure the customized dataset when stored on the smart card. The method further includes transmitting the customized dataset to the card issuance device.

In a second aspect, a secure end-to-end smart card personalization system is disclosed. The system includes a personalization system comprising a programmable circuit communicatively connected to a memory storing computer executable instructions. When executed, the instructions cause the personalization system to generate a customized dataset including personalization data for installation onto a smart card, the customized dataset being generated based on an operating system of the smart card by performing a personalization process using a virtual smart card formatted according to the operating system; encrypt at least a portion of the customized dataset, at a personalization system, using an encryption key that is associated with a card issuance device that is separate from the personalization system, the encryption key being different from any encryption key used to secure the customized dataset when stored on the smart card; and transmit the customized dataset to the card issuance device.

In a third aspect, a secure end-to-end smart card personalization system is disclosed. The system includes a personalization system communicatively connected to a card issuance device. The personalization system is configured to generate a personalized virtual smart card including personalization data for installation onto a real smart card, the customized dataset being generated based on an operating system of the real smart card by performing a personalization process using a virtual smart card formatted according to the operating system. The personalization system is also configured to encrypt at least a portion of the customized dataset using a public key of a public-private key pair unique to a printer and different from a public key of the real smart card. The personalization system is further configured to transmit the customized dataset to the card issuance device.

In a further aspect, a method of personalizing a smart card is disclosed. The method includes receiving at a personalization system an operating system type of a smart card to be personalized, and generating a customized dataset including personalization data for installation onto the smart card to be personalized by performing a personalization process using a virtual smart card formatted according to the operating system without requiring a concurrent secured connection to the card issuance device. The method further includes, after the customized dataset is generated, transmitting the customized dataset to the car issuance device.

In a still further aspect, a method of personalizing a smart card includes transmitting to a personalization system an operating system type of a smart card to be personalized; receiving, at a card issuance device, a customized dataset including personalization data for installation onto the smart card to be personalized, the customized dataset including a personalized virtual smart card formatted according to the operating system; and personalizing a real smart card using the customized dataset.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Fig. 1 illustrates an example network in which secure personalization of applications on smart cards can be accomplished;
Fig. 2A illustrates a flowchart of a method of generating personalization data at a personalization system, according to an example embodiment;
Fig. 2B illustrates a flowchart of a method of printing a smart card using personalization data generated at a personalization system as described in accordance with Fig. 2A;
Fig. 3 illustrates a computing device with which aspects of the present disclosure can be implemented;
Fig. 4 illustrates a personalization system, according to an example embodiment;
Fig. 5 illustrates an example communication sequence utilized to personalize a smart card according to example embodiments of the present disclosure;
Fig. 6 illustrates a system for secure personalization of a smart card, according to a first example embodiment;
Fig. 7 illustrates a system for secure personalization of a smart card, according to a second example embodiment;
Fig. 8 illustrates an example communication sequence utilized to authenticate a smart card; and
Fig. 9 illustrates a system for secure personalization of a smart card, according to a third example embodiment.

### DETAILED DESCRIPTION

As briefly described above, embodiments of the present invention are directed to systems and methods for secure personalization of smart cards. In example aspects, the secure personalization of smart cards disassociates creation of Application Protocol Data Units (APDUs) and Application Load Units (ALUs) from programming of the smart card itself, thereby allowing creation of application data intended to be installed on a smart card during a personalization process to be disconnected from the smart card, in either or both of time and location. This allows for pre-creation of application programming and personalization data for a smart card and/or creation of personalization data at a location other than at a printing system that is interfaced directly to the smart card. Further, it allows for securing of personalization data that is transmitted to a smart card printer using a security key other than the one used by the smart card; because personalization of the smart card is moved to the printer from the personalization system, concerns regarding security of personalization data in transmission to the printer are reduced.

In some aspects, a customized dataset used for programming a smart card can be prepared for transmission to a smart card, and used in personalizing the smart card. The customized dataset can be, for example, a personalized "virtual" smart card that is transmitted to a location that is local to the "real" smart card that is to be personalized. The virtual smart card can be, for example, encrypted with an encryption key that is associated with the card issuance device (e.g., printer) at which the smart card resides. The encryption key can be an asymmetric or symmetric key, and optionally can be a key that is unique to that card issuance device. The use of such a key ensure security during transmission of the customized dataset (e.g., the personalized "virtual" smart card).

At the end device, the personalization that is reflected in the virtual smart card can be conveyed to the real smart card, so the real smart card can be correctly personalized. Furthermore, the card issuance device can handle programming the smart card using personalization data reflected in the virtual smart card. As such, the personalization system need not be configured to accommodate personalization at a plurality of different card issuance devices, but rather configuration of data for different smart card operating systems can be handled by the card issuance device, simplifying the requirements of the personalization system. Additionally, a secured connection between the personalization system and card issuance device is not required during personalization of the real smart card, simplifying security and communication requirements of such distributed card issuance systems. Still further, use of an encryption key associated with, or in some cases unique to, the card issuance device allows for validation of the card issuance device. This improves security by avoiding distribution of personalization data, or decryption of that data, at an incorrect card issuance device.

The secure personalization features described herein can be used in conjunction with a plurality of different types of smart card platforms. By way of background, a number of different types of platforms exist, and each of which has an operating system including hardware-specific firmware useable to provide secure access to on-card storage, authentication, and encryption. Generally, the smart card operating system controls a communication protocol of the smart card, manages files and data held in memory, and provides access control and card security features for the smart card. Examples of operating systems include MULTOS, GlobalPlatform, and a variety of proprietary or native operating systems. Each has a different personalization process that is card dependent, in that the personalization system typically is required to identify the card type or operating system, and then select an appropriate method or process with which to generate the APDUs used to personalize the application on that card. In accordance with the present disclosure, the methods and systems described herein provide for secure personalization of smart cards that use a variety of smart card platforms.

Furthermore, and as noted in further detail below, the term smart card is intended to encompass not only physical smart cards (both contact smart cards and contactless cards), but also electronic smart cards, such as electronic representations of banking cards or other cards that store sensitive personal data and can be used in conjunction with trusted transactions (e.g., for access or financial transactions). For example, electronic smart cards may be stored in an electronic wallet on a smartphone or other mobile device.

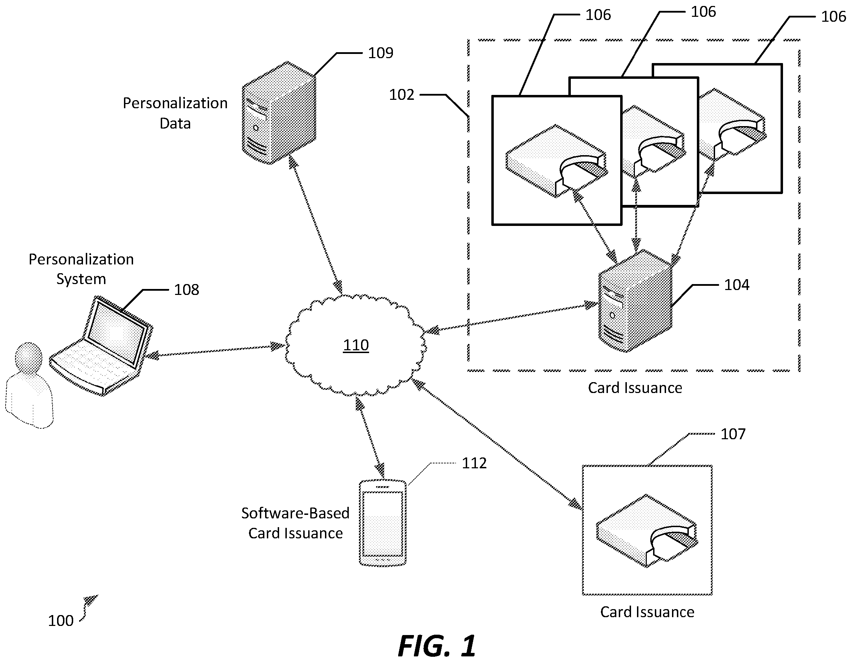

Referring to Fig. 1, an example network 100 in which secure personalization of applications on smart cards can be accomplished. The network 100 includes a variety of types of network locations, only some of which may be present in the context of any particular personalization scenario (as further described below).

In the example shown, the network 100 can include a card issuance location 102 having a card issuance computing system 104 that is communicatively connected to one or more card issuance devices, shown as printers 106. In the example shown, a personalization system 108 and a personalization data server 109 are communicatively connected with the card issuance computing system 104 via a network 110. The network 110 can correspond to a public network, such as the Internet.

The card issuance location 102 generally corresponds to a location at which a smart card will be "personalized". Specifically, the card issuance location 102 is a location at which a smart card may be printed, and at which the smart card will receive, via a smart card printer 106, programming of specific applications and/or data that are unique to that smart card. Example smart card applications and/or data can include information associated with an intended user of the smart card, information regarding access rights, programming logic defining security access and/or financial account access, retail loyalty, and/or other types of applications. Accordingly, the card issuance location 102 may be a bulk card issuance facility, or may be a location at which smart cards may be issued to users in an "on demand" manner, such as at a financial institution or secured facility.

The card issuance computing system 104 can, in example embodiments, correspond to a printing system, such as a printing data coordination system from which customized datasets can be provided to the card issuance devices (e.g. printers 106) for programming of smart cards. In example embodiments, the card issuance computing system 104 can be interfaced to a single printer 106, or, as seen in Fig. 1, to a plurality of printers 106. In such a configuration, the card issuance computing system 104 can coordinate data transmission to the various printers 106 to ensure adequate throughput to those printers as each printer becomes available and ready to personalize a new smart card. The printers 106 generally can be configured to perform a personalization process by which personalization data is programmed onto a smart card, as well as optionally a physical printing process in which the smart card is imprinted with text, graphics, or other labeling.

However, in some applications of the present disclosure, a card issuance computing system 104 is not present. For example, and as further seen in Fig. 1, a card issuance device, such as a printer 107, can be directly connected to network 110. In such arrangements, the printer 107 can operate as a stand-alone issuance system, from which smart cards can be issued. The printer 107 may be located, for example, at a branch location of a financial institution where lower quantities of smart cards are required to be issued, and as such, the plurality of printers 106 are not required.

Example types of smart cards that can be personalized by printers 106, 107 can include, for example, physical smart cards including financial cards (e.g., debit cards or credit cards) having a magnetic stripe and an integrated circuit card (ICC) chip. Accordingly, in such cases, personalization of the smart card can include encoding data to the magnetic stripe, as well as printing or embossing text and/or graphics onto the physical card.

In still further examples, rather than use of a card issuance device such as printers 106, 107, a software-based card issuance device could be used to issue a smart card to a user. As seen in Fig. 1, a mobile device, such as a smartphone 112 having mobile wallet software installed thereon, can act as a card issuance device by including card issuance software capable of generating a real personalized software-implemented smart card.

The personalization system 108 generally corresponds to a computing system having a software tool installed thereon that is capable of generating programming for storage on and execution from a smart card. In some cases, the personalization system 108 is located proximate to the printers 106, for example within a same local network as the card issuance computing system 104, or integrated therewith into the same computing system. However, in accordance with the secured aspects of the present disclosure, the personalization system 108 can more easily be located remotely from the printers 106, since the personalization system 108 can be used to generate personalized card data at a time other than the time at which a card is personalized. In some aspects, the personalization system 108 can be available to a user either as a discrete computing system, or as a cloud-based system accessible via a remote computing system having a browser installed thereon. In such situations, the personalization system 108 may be remote from both a user requesting card issuance and a printer or other card issuance device, although the user requesting card issuance may be local to the card issuance device. Such arrangements may be used, for example, in the case of cloud-based card issuance initiated at branch locations of financial institutions or facilities where limited card issuance volumes are required.

In example embodiments, the personalization system 108 prepares personalization data in accordance with a format of a "virtual" smart card, and transmits that personalization data to a card issuance device, such as the card issuance computing system 104 and printer 106, the printer 107, or the software-based card issuance device (mobile device 112), for personalization of a smart card.

The personalization data server 109 stores data to be used in forming personalized, or custom, datasets for programming of smart cards using printers 106. In example embodiments, the personalization data server 109 can include a database of application data and/or user data transferrable to smart cards.

The personalization system 108 can, in such arrangements, transmit to the card issuance device a customized dataset that can be used for personalization of the smart card at the card issuance device. The customized dataset can be, for example, a personalized virtual smart card, which can be created using personalization data either local to the personalization system 108 or obtained from a personalization data server 109.

In example embodiments, the various computing systems, including the card issuance computing system 104, the personalization system 108, and the personalization data server 109, can be located at a common location or at a common computing system, such as might be the case if personalization were performed locally at the card issuance location 102. In other embodiments, such as the one shown, one or more of these systems can be located remotely from the printers 106, 107, or mobile device 112, as previously noted.

As noted herein, printers 106, 107 generally correspond to one example of a card issuance device. Printers generally include a card programming and a physical printing component, such that each printer can imprint images or characters on a smart card and correspondingly program the smart card for a particular application. Example printers may include, for example, an MX-series card issuance system, or a CD- and/or CR-series printing system, each of which are commercially available from Entrust Datacard Corporation of Shakopee, Minnesota. It is noted that in alternative implementations, card issuance devices may be used that include additional functionality, or which lack the physical character/graphical printing characteristics of printers 106. For example, a card issuance device may include mobile device 112, which includes software for instant issuance of a software-based smart card. For simplicity, in the present specification, the term "printer" will be used generally for a card issuance device, although such card issuance devices are not necessarily limited to printers.

Referring to Fig. 1 generally, and reviewing the various card issuance devices (e.g., the card issuance location 102, the networked printer 107, and the mobile device 112) it is noted that one or more of these subsystems of the network 100 can be included in an overall system for card issuance, and that not all such subsystems are required to be present to implement aspects of the present disclosure. Generally, in accordance with the present disclosure, at least one card issuance device will be associated with a smart card, and is communicatively connected to a personalization system (e.g., either local, remote, or cloud-based) that can provide to it personalization data for personalization of a smart card by providing a personalized virtual smart card or other format of personalized data prepared to be used in personalization of the "real" (hardware or software-based) smart card.

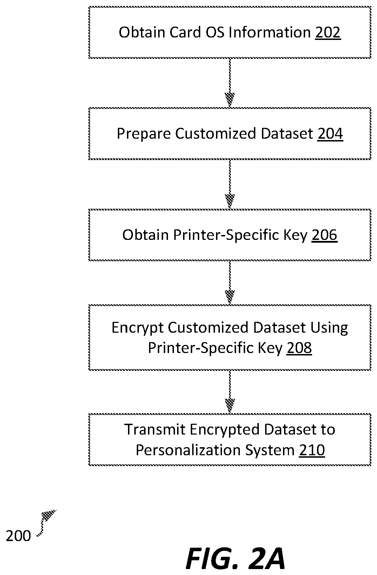

Referring now to Figs. 2A-2B, flowcharts of methods of generating personalization data (e.g., data customized to a particular smart card for programming on that smart card, such as APDUs), and printing a smart card using personalization data, are shown. The methods described herein can be performed at a personalization system 108 and a printer 106, 107, respectively. Referring first to Fig. 2A, a method 200 of generating a customized dataset for installation onto a smart card is described. The customized dataset can be, for example personalization data formed as ALUs, which can in turn be programmed onto the smart card via APDU exchange. The personalization data can be, for example, included in a virtual smart card that is personalized with a particular end user's personalization data, with the virtual smart card transmitted to the printer for personalization of the "real" smart card.

In the embodiment shown, the method includes obtaining, from a card issuance device, a format of a smart card to be personalized (step 202). This can include, for example, obtaining input from a user identifying a type of smart card to be personalized, or querying a card issuance device to determine the type of smart card to be personalized. By type, or format, it is generally intended that an operating system or platform architecture of the smart card is determined, since different smart cards are personalized differently and using different data formats.

The method 200 further includes, in the embodiment shown, generating the customized dataset for installation onto a smart card (step 204). The customized dataset is constructed for use with the determined operating system of the smart card. As noted above, each of a plurality of different smart card operating systems have different requirements for programming of the smart card in terms of secured programming sequence and formatting of data to be programmed. In example embodiments, the customized dataset includes personalization data, and can optionally include one or more applications that use the personalization data to be stored on the smart card. The personalization data can include, for example, a set of specific encryption keys to be used by the card, information about a person to whom the card will be issued (e.g., the cardholder's name) or access or account details for which the card is used. The customized dataset represents a formatting of the personalization data that occurs after a personalization sequence with a smart card. In some cases, the customized dataset corresponds to a personalized version of a "virtual" smart card that is selected to have a same operating system as the "real" smart card that ultimately will be personalized. In other embodiments, the personalized "virtual" smart card is selected to have an operating system that is based on and/or compatible with the operating system of the "real" smart card.

In the embodiment shown, the method 200 further includes obtaining an encryption key that is specific to the card issuance device (step 206). The encryption key can be a public key of a public-private key pair unique to a card printer, or a symmetric key used to wrap encrypted personalization data, as is further described below. Notably, the encryption key that is used is a different key from any key of the real smart card, which is typically used to form the customized dataset. The encryption key can be retrieved from the card issuance device, or a key repository used to manage keys of card issuance devices. Although various key types could be used, a printer-specific public-private key pair allows for verification of the card issuance device, since only the card issuance device will have access to the private key, with the key repository merely managing public key access. In such instances, the encryption key is specific to the device performing the programming of the smart card (e.g., the printer 106, 107 or mobile device 112) so that card issuance device (e.g., printer) is capable of processing the customized dataset at the time of programming to encrypt that customized dataset for use with the specific card being personalized. For example (and as explained below), the printer can decrypt the customized dataset using the private key of its public-private key pair, and re-encrypt the customized dataset using the public key of the smart card's public private key pair, thereby preparing the customized dataset for storage on the smart card. Of course, in other embodiments, the encryption key that is used may not be device-specific, but may be associated with the device. For example, a symmetric key may be issued to both the card issuance device and personalization system by an authentication system, with the symmetric key being maintained in a key repository in association with an identifier of the card issuance device. Other configurations are possible as well, which allow for sharing of the key or complementary keys between the card issuance device and personalization system.

The method further includes encrypting the customized dataset at the personalization system using the encryption key that is unique to a card issuance device, such as a printer (step 208). This can include use of the printer-specific encryption key obtained in step 206, above. In some instances, the encryption key can be used in the same way as the public key of a public-private key pair of a smart card; the encryption key can also be a symmetric key. In either event, the encryption key can either be a separate key used for communication between the personalization device 108 and an intended card issuance device (e.g., printer 106, 107, or mobile device 112) or can be treated, in effect, as a key of a "virtual" smart card that is used by the personalization device to create personalized virtual smart cards which can then be transmitted to card issuance devices for personalization of real smart cards. In either instance, because the personalization device 108 creates a personalized virtual smart card largely without maintaining open a communication session with the real smart card to be personalized, the real smart card does not need to be concurrently present at the printer to allow a separate personalization system to generate a customized dataset for transmission at the printer.

As seen in Fig. 2A, once the customized dataset is encrypted using the encryption key that is specific to the card issuance device, the encrypted customized dataset can be transmitted to the card issuance device (step 210). Depending upon the specific network arrangement of the personalization system and the card issuance device, transmitting the encrypted customized dataset can occur, for example, via the Internet.

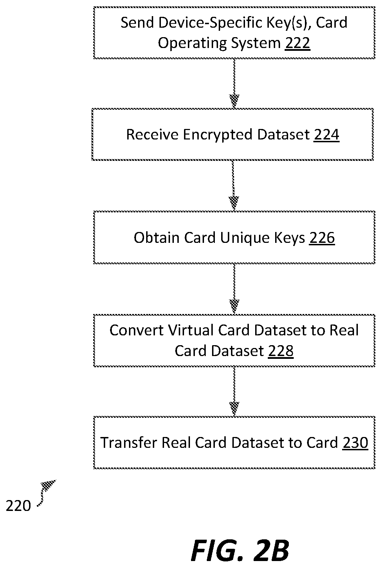

Fig. 2B illustrates a flowchart of a method 220 of printing a smart card using personalization data generated at a personalization system as described in accordance with Fig. 2A. The method 220 can be performed, for example, at a card issuance device, such as printers 106, 107, or mobile device 112 of Fig. 1. In the example shown, the method 220 includes sending a printer-specific key to a personalization system, as well as identifying a type (e.g., operating system) of the smart card to be personalized (step 222). The printer-specific key can be a key that is uniquely known to the printer or which is complementary to a key of the printer, such as a public key of a public-private key pair of the printer, and can be sent from the printer or other card issuance device, or from a key repository. The method 220 also includes receiving an encrypted dataset (step 224). The encrypted dataset can be, for example, the customized dataset including personalization data received from a personalization system (e.g., an encrypted, personalized virtual smart card). It is noted that transmission of the encryption key to the personalization system will typically occur prior to receiving the encrypted dataset from the personalization system, since the encrypted dataset will be encrypted using, among other keys, the encryption key provided by the printer or key repository.

In the example shown, the method 220 includes obtaining unique card keys (step 226). The unique card keys can be, for example, a public-private key pair of a real smart card to be personalized. The unique card keys can be obtained in a variety of ways. In example embodiments, the unique card keys can be stored on the smart card, and obtaining unique card keys includes receiving at a printer the public key of the smart card's public-private key pair. This can occur, for example, during an APDU exchange sequence between the printer and smart card, such as may occur during a traditional smart card personalization sequence. In other examples (e.g., where a smart card does not have encryption keys stored thereon, or where the smart card is to be reprogrammed), obtaining unique card keys can include either generating the public-private key pair at the printer (e.g., from a cryptographic engine local to the printer) or receiving the public-private key pair from a computing system assigning that key pair to a particular smart card.

The method 220 further includes converting the customized dataset for storage on the smart card (step 228). In the example as seen in Fig. 2B, converting the customized dataset can include decrypting the received encrypted dataset using a private key of the public-private key pair that is unique to the printer (or using s symmetric key if used for encryption), and, at the printer, forming one or more programming datasets for storage on the smart card. It is noted that sending the customized dataset to the smart card can include establishing, at the printer, a secure channel from the printer to the smart card, and performing a series of APDU exchanges to obtain a public key of the smart card and encrypting personalization data for storage on the smart card. The APDU exchanges can transmit personalization data from the virtual smart card to the real smart card, thereby causing transmission of the personalization data, now encrypted with the "real" smart card's encryption key, to the smart card for storage and use according to the operating system of the smart card (step 230). Accordingly, the real smart card is therefore personalized using the personalization data included in the virtual smart card received from the personalization system 108. It is noted that in some instances, at least a portion of the converting of personalization data for storage on a smart card and transmission to the smart card may happen concurrently, in that there may be some communication with the smart card necessary to obtain card-specific encryption key(s) to be used to both create "real" card personalization data and to form a secure channel to the card for transmission of that data.

Referring to Figs. 2A-2B generally, is noted that in typical instances where personalization data is prepared for storage on a smart card, a communication sequence occurs between a personalization system and the smart card including multiple message exchanges, during which keys are exchanged that are used to generate data used to program or personalize the smart card. However, and as reflected in Figs. 2A-2B, a single transmission occurrence (e.g., as in step 208 of Fig. 2A) can be used to transmit an encrypted customized dataset to the printer for smart card personalization. This mitigates the likelihood of network interruptions causing failure of the personalization process. Furthermore, because a "virtual" smart card and printer-specific key can be used to generate the encrypted customized dataset, the customized dataset that is transmitted to the printer is secured by the printer's encryption key , and therefore interception of the dataset when sent to the printer will not generally compromise the dataset at the smart card. Also, the method 200 can be performed at a different time from smart card personalization itself, as in method 220. As such, creation of a customized dataset can be temporally decoupled from programming of the smart card as well, thereby mitigating the extent to which creation of such customized datasets limits the speed with which smart cards can be personalized (e.g., in the instance of bulk personalization processes at a card processing facility). This also allows personalization systems to be implemented using lower-cost, lower-performance computing systems.

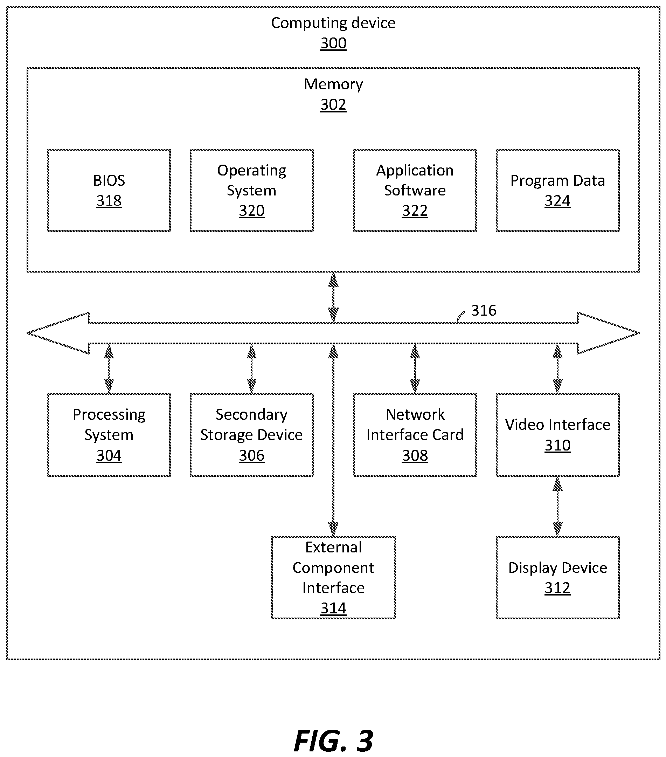

Referring now to Fig. 3, a computing device is shown, with which aspects of the present disclosure can be implemented. The computing device 300 can be used, for example, to implement a personalization system 108, personalization data server 109, or card issuance computing system 104 of Fig. 1, above.

In the example of Fig. 3, the computing device 300 includes a memory 302, a processing system 304, a secondary storage device 306, a network interface card 308, a video interface 310, a display unit 312, an external component interface 314, and a communication medium 316. The memory 302 includes one or more computer storage media capable of storing data and/or instructions. In different embodiments, the memory 302 is implemented in different ways. For example, the memory 302 can be implemented using various types of computer storage media, and generally includes at least some tangible media. In some embodiments, the memory 302 is implemented using entirely non-transitory media.

The processing system 304 includes one or more processing units, or programmable circuits. A processing unit is a physical device or article of manufacture comprising one or more integrated circuits that selectively execute software instructions. In various embodiments, the processing system 304 is implemented in various ways. For example, the processing system 304 can be implemented as one or more physical or logical processing cores. In another example, the processing system 304 can include one or more separate microprocessors. In yet another example embodiment, the processing system 304 can include an application-specific integrated circuit (ASIC) that provides specific functionality. In yet another example, the processing system 304 provides specific functionality by using an ASIC and by executing computer-executable instructions.

The secondary storage device 306 includes one or more computer storage media. The secondary storage device 306 stores data and software instructions not directly accessible by the processing system 304. In other words, the processing system 304 performs an I/O operation to retrieve data and/or software instructions from the secondary storage device 306. In various embodiments, the secondary storage device 306 includes various types of computer storage media. For example, the secondary storage device 306 can include one or more magnetic disks, magnetic tape drives, optical discs, solid-state memory devices, and/or other types of tangible computer storage media.

The network interface card 308 enables the computing device 300 to send data to and receive data from a communication network. In different embodiments, the network interface card 308 is implemented in different ways. For example, the network interface card 308 can be implemented as an Ethernet interface, a token-ring network interface, a fiber optic network interface, a wireless network interface (e.g., WiFi, WiMax, etc.), or another type of network interface.

The video interface 310 enables the computing device 300 to output video information to the display unit 312. The display unit 312 can be various types of devices for displaying video information, such as an LCD display panel, a plasma screen display panel, a touch-sensitive display panel, an LED screen, a cathode-ray tube display, or a projector. The video interface 310 can communicate with the display unit 312 in various ways, such as via a Universal Serial Bus (USB) connector, a VGA connector, a digital visual interface (DVI) connector, an S-Video connector, a High-Definition Multimedia Interface (HDMI) interface, or a DisplayPort connector.

The external component interface 314 enables the computing device 300 to communicate with external devices. For example, the external component interface 314 can be a USB interface, a FireWire interface, a serial port interface, a parallel port interface, a PS/2 interface, and/or another type of interface that enables the computing device 300 to communicate with external devices. In various embodiments, the external component interface 314 enables the computing device 300 to communicate with various external components, such as external storage devices, input devices, speakers, modems, media player docks, other computing devices, scanners, digital cameras, and fingerprint readers.

The communication medium 316 facilitates communication among the hardware components of the computing device 300. The communications medium 316 facilitates communication among the memory 302, the processing system 304, the secondary storage device 306, the network interface card 308, the video interface 310, and the external component interface 314. The communications medium 316 can be implemented in various ways. For example, the communications medium 316 can include a PCI bus, a PCI Express bus, an accelerated graphics port (AGP) bus, a serial Advanced Technology Attachment (ATA) interconnect, a parallel ATA interconnect, a Fiber Channel interconnect, a USB bus, a Small Computing system Interface (SCSI) interface, or another type of communications medium.

The memory 302 stores various types of data and/or software instructions. The memory 302 stores a Basic Input/Output System (BIOS) 318 and an operating system 320. The BIOS 318 includes a set of computer-executable instructions that, when executed by the processing system 304, cause the computing device 300 to boot up. The operating system 320 includes a set of computer-executable instructions that, when executed by the processing system 304, cause the computing device 300 to provide an operating system that coordinates the activities and sharing of resources of the computing device 300. Furthermore, the memory 302 stores application software 322. The application software 322 includes computer-executable instructions, that when executed by the processing system 304, cause the computing device 300 to provide one or more applications. The memory 302 also stores program data 324. The program data 324 is data used by programs that execute on the computing device 300.

Although particular features are discussed herein as included within an electronic computing device 300, it is recognized that in certain embodiments not all such components or features may be included within a computing device executing according to the methods and systems of the present disclosure. Furthermore, different types of hardware and/or software systems could be incorporated into such an electronic computing device.

In accordance with the present disclosure, the term computer readable media as used herein may include computer storage media and communication media. As used in this document, a computer storage medium is a device or article of manufacture that stores data and/or computer-executable instructions. Computer storage media may include volatile and nonvolatile, removable and non-removable devices or articles of manufacture implemented in any method or technology for storage of information, such as computer readable instructions, data structures, program modules, or other data. By way of example, and not limitation, computer storage media may include dynamic random access memory (DRAM), double data rate synchronous dynamic random access memory (DDR SDRAM), reduced latency DRAM, DDR2 SDRAM, DDR3 SDRAM, solid state memory, read-only memory (ROM), electrically-erasable programmable ROM, optical discs (e.g., CD-ROMs, DVDs, etc.), magnetic disks (e.g., hard disks, floppy disks, etc.), magnetic tapes, and other types of devices and/or articles of manufacture that store data. Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

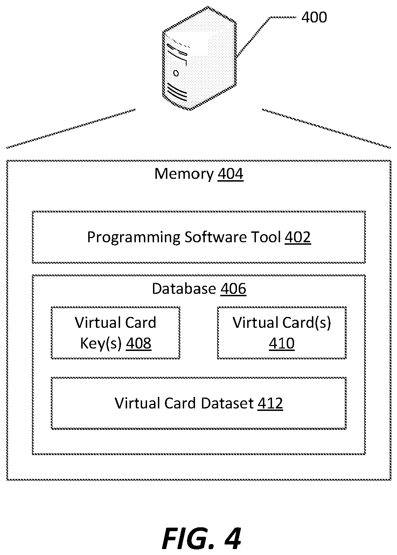

Referring now to Fig. 4, a particular computing system 400 is illustrated that can be used to implement a personalization system according to an example embodiment. Generally, the computing system 400 can be implemented using a device such as that described above in connection with Fig. 3. However, in the example shown, the computing system 400 includes a memory 404 that can be implemented on one or more memory or storage devices, such as memory 302 and/or secondary storage device 306. The memory 404 includes a programming software tool 402 and a database 406.

The programming software tool 402 generally obtains personalization data to be included in a customized dataset to be programmed onto a smart card, and configures that personalization data in accordance with one or more smart card operation system formats.

The database 406 stores an encryption key 408, a virtual card 410, and virtual card dataset 412. The encryption key 408 can be, for example, a key of a card issuance device that can be used for secure transmission of a personalized virtual smart card that is created at the personalization system. The virtual card 410 represents a particular smart card, and can include an operating system and optionally one or more applications that are constructed according to a known smart card operating system architecture. The virtual card 410 is therefore capable of operating in conjunction with the programming software tool 402 to perform a sequential process of APDU exchange to establish a virtual secure connection between the virtual card 410 and programming software tool 402, provide to the programming software tool 402 any virtual card keys that are associated with the virtual card 410, and allow the programming software tool to create the customized dataset 412 for personalizing the virtual card 410, thereby creating a personalized virtual smart card, seen as the customized dataset 412. As such, locally at the personalization system 400, the programming software tool 402 and the virtual card 410 perform the equivalent of a personalization process. It is noted that once the customized dataset 412 (shown as a "virtual card dataset" 412) is created, it can then be transmitted to a printer for conversion from a virtual card customized dataset to a real card customized dataset for storage on a real smart card (e.g., as described above in conjunction with Fig. 2B).

It is noted that although a single virtual smart card 410 is shown, the personalization system 400 can include more than one virtual smart card can be included. For example, a separate virtual smart card 410 can be maintained on the personalization system for each operating system that may be supported by that personalization system. Once the personalization system receives an indication of a particular operating system of a real smart card to be personalized, the personalization system can select the appropriate virtual smart card having a compatible operating system, and can perform a personalization process on a copy of that virtual smart card to create a customized dataset in the form of a personalized virtual smart card. That personalized virtual smart card can then be encrypted with the device-specific encryption key 408 for secured transmission to the card issuance device, which can then decrypt the personalized virtual card and use the personalization data from that virtual card to personalize the real (hardware or software-based) smart card at that card issuance device, either at a time of receipt or at some later time convenient to the card issuance device.

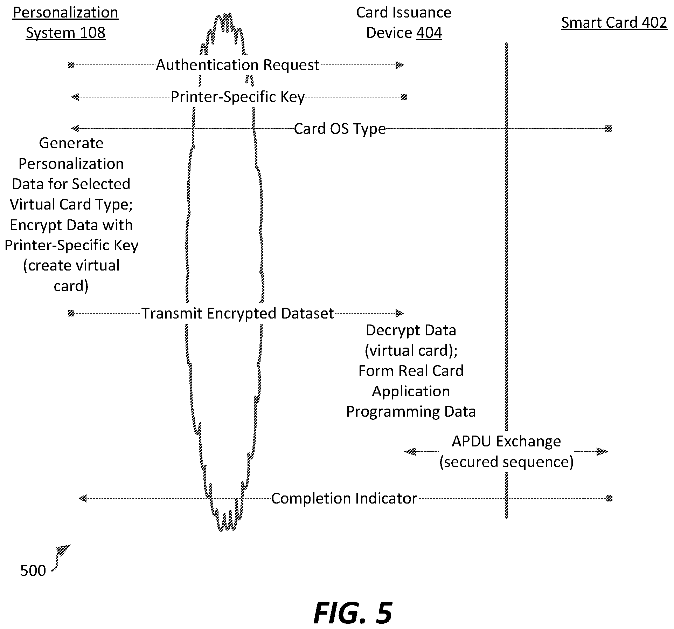

An overall, generalized sequence 500 of data transmissions to accomplish the secured smart card personalization is described in connection with Fig. 5. The sequence of transmissions is performed between for example, a personalization system 108, a card issuance device 404 (e.g., such as printer 106, printer 107, or mobile device 112), and a smart card 402 interfaced with the card issuance device 404.

In the example sequence 500 as shown, the personalization system 108 can send an authentication request to the card issuance device 404. The card issuance system device 404 can then respond to the security processing communication sequence by providing to the personalization system 108 a printer-specific key (e.g., the public key of the printer / card issuance device) that can be used to secure transmissions between the personalization system 108 and the card issuance device 404. The card issuance device 404 can provide the printer-specific key by, for example, either transmitting the key directly to the personalization system 108, or by providing a key reference to a key repository from which the personalization system 108 can retrieve a key identified by the key reference. The card issuance device 404 can also optionally transmit to the personalization system 108 a type of smart card to be personalized (e.g., the OS type of the smart card).

The personalization system 108 can then, based on the type of smart card, select a virtual smart card available at the personalization system and generate a customized dataset, including personalization data, thereby forming a personalized virtual smart card. The virtual smart card can also be secured, for example using the printer-specific key. This includes encrypting that customized dataset, including personalization data, with the printer-specific key. Optionally, the virtual smart card can be secured by using the printer-specific key as the public key of the virtual smart card, thereby ensuring that only the printer can decrypt and access personalization data.

In the example shown, the personalization system 108 then transmits the encrypted personalization data to the card issuance device 404. As noted above, this can occur in a single transmission or short transmission sequence that avoids lengthy handshaking or communication sequences that would typically be required to form and maintain a secure channel between the personalization system 108 and card issuance device 404 throughout a real smart card personalization process. This is because the customized dataset is encrypted and formatted in a different form (personalized to a different card) from the form in which it will be stored on a real smart card. The card issuance device 404 can decrypt the customized dataset using its private key (or otherwise, its key that is complementary to the key provided to the personalization system 108) and can reformulate (as necessary) the customized dataset for storage on a real smart card. This reformulation can take a variety of forms. At a minimum, where the formatting of the customized dataset transmitted between the personalization system 108 and the card issuance device 404 is the same as the format of storage on a smart card, the printer can decrypt the customized dataset using the private key of the public-private key pair it shared with the personalization system, extract personalization data from the customized dataset (the personalized virtual smart card), and perform a personalization process using a local communication session between the card issuance device 404 and the real smart card 402. In other instances, where an operating system or format of a smart card is known at the printer and different from the format in which the customized dataset is received (e.g., if the personalized virtual smart card is formatted using a different operating system or other change in formatting is required), the reformulation can include reformatting of the customized dataset for use with that different operating system. An APDU exchange sequence allows the card issuance device 404 to obtain an encryption key of the smart card 402, establish a secure communication tunnel to the smart card using the smart card's encryption key (e.g., the public key of the smart card for which the customized dataset was created), and transmitting the encrypted data to the smart card 402 via the secure tunnel to complete personalization of the smart card.

Optionally, a completion status message can be returned to the personalization system 108 from the card issuance device 404to indicate success/failure of the personalization process with respect to a specific smart card. This information can include an identity of a particular smart card and a status message, for example a time of completion of the personalization process and/or a simple pass/fail status. Other information can be included in such a completion status message as well.

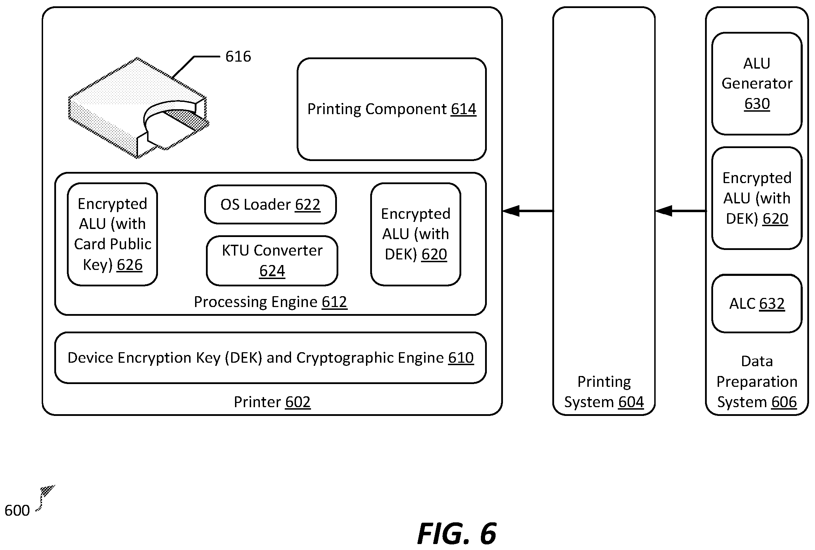

Referring now to Figs. 6-9, specific examples of smart card personalization systems implemented using the methods and systems of the present disclosure are depicted, in which different smart card operating systems are utilized by the target smart card to be personalized.

Referring first to Fig. 6, a system 600 for secure personalization of a smart card using a first operating system, such as the MULTOS operating system. In this example, a printer 602 is communicatively connected to a printing system 604, which is in turn communicatively connected to a data preparation system 606. The printer 602 can be implemented using one or more of the printers 106 of Fig. 1, while the data preparation system 606 can correspond, for example, to the personalization system 108. The printing system 604 can assist with coordinating printing and personalization activities, for example as card issuance computing system 104. Of course, in other example implementations, a printing system such as system 604 could be excluded entirely, and a printer 602 could be directly connected to a remote data preparation system 606.

In the embodiment shown, the data preparation system 606 includes an Application Load Unit (ALU) Generator 634, which is a software tool configured to generate application load units (ALUs) capable of being stored on and executed from a smart card hosting the MULTOS operating system. The ALU generator 630 will generate an ALU 620, which is encrypted at the data preparation system 606 using a device encryption key (DEK) of the printer 602. An Application Load Certificate (ALC) 632 can be used as well, and corresponds to a certified copy of the public key of an application provider, as well as an application header. The ALC 634 can be signed using a MULTOS card authority's private key certifying key (KCK), allowing any MULTOS card that are appropriately implemented to verify the authenticity of the certificate. Accordingly, the ALU 620 can be certified to the smart card to which it is directed.

The encrypted ALU 620 can be passed to the printer 602 via the printing system 604. The printer 602 includes a cryptographic engine 610, a processing engine 612, a printing component 614, and a smart card personalization and programming device 616.

The cryptographic engine 610 is configured to generate encryption keys associated with the printer, and to manage storage of encryption keys received from other devices, such as smart cards interfaced to the smart card personalization and programming device 616. In some embodiments, the cryptographic engine 610 can be in memory of the printer 602 to ensure security, and in some embodiments, can include hardware encryption circuitry. However, in other implementations, the cryptographic engine 610 can be communicatively accessible to and separate from the printer (e.g., at the printing system 604 or other computing system communicatively connected thereto). In the example shown, the cryptographic engine 610 generates a device encryption key, which corresponds to a public key of a public-private key pair unique to the printer 602. The printer 602 can therefore provide the device encryption key to the data preparation system 606 for encrypting the ALU 620 prior to sending the ALU to the printer.

The processing engine 612 includes a plurality of executable components configured to personalize smart cards received by the smart card personalization and programming device 616. In the example shown, the processing engine 612 receives the encrypted ALU 620. The processing engine includes an operating system loader 622 and a Key Transformation Unit (KTU) converter 624. The operating system loader 622 generates commands (e.g., in the form of APDUs) that can be exchanged with a smart card via the smart card personalization and programming device 616 to program a smart card interfaced to that device. The KTU converter stores details of encryption of the ALU, and is encrypted using the public key of the target smart card.

The printing component 614 corresponds generally to a physical printing device that can imprint images and characters on a physical smart card. The smart card personalization and programming device 616 is a device having an electrical interface capable of communication with a smart card; in example embodiments, the electrical interface can include either electrical contacts or correspond to a wireless (e.g., near field) interface capable of exchanging APDUs with the card to accomplish a card programming process. In example personalization processes, the printing component 614 and the smart card personalization and programming device 616 are sequentially or concurrently utilized to generate a personalized smart card. Additionally, in instances where the card issuance device is a mobile device rather than a printer, the printing component 614 can optionally be excluded, with the smart card personalization and programming device 616 in those instances corresponding to a secure software interface to a software-based real smart card to be personalized.

In a typical MULTOS programming arrangement, an ALU generation system would generate an ALU using a KTU encrypted using the MULTOS card public key or a symmetric key encryption key; the ALU is then programmed onto the smart card, in accordance with the MULTOS Guide to Loading and Deleting [GLDA]. In this scenario, where the printer 602 and the data preparation system 606 are remote from one another, either the MULTOS card public key or a symmetric key encryption key is transmitted via the Internet, which represents a security risk.

By contrast, when the system 600 is in use, the printer 602 receives or generates a device encryption key (DEK), which can be either a symmetric key or an asymmetric key (e.g., a public-private key pair). When the system 600 is to personalize a smart card using the printer 602, the data preparation system 606 will retrieve the device encryption key from the printer 602, e.g., by querying the printer or requesting the key from a centralized key store. Optionally, the data preparation system 606 can verify the device encryption key using a certificate. The data preparation system 606 then generates the ALU 620 by protecting the KTU with the device encryption key. At this stage, the data preparation system 606 is not required to, and preferably does not have, any knowledge of a specific card encryption key, such as the smart card's MULTOS card public key. The data preparation system 606 transmits the ALU 620 to the printer 602 in a single command sequence, as noted above in connection with Figs. 2A-2B and Fig. 5. Accordingly, only the specific printer 602 which provided its device encryption key is capable of decrypting the received ALU 620.

At the printer 602, the processing engine 612 will query a smart card available to the printer at the smart card personalization and programming device 616, to obtain the card public key. Once the printer 602 receives the ALU 620, the processing engine 612 will generate the ALU 626 that is encrypted with the card public key using the KTU converter 624. In particular, the processing engine 612 uses the cryptographic engine 610 to decrypt the received encrypted ALU 620, and converts that ALU to a real card ALU 626. The OS loader 622 then transfers the real card ALU 626 to the smart card via the smart card personalization and programming device 616. It is noted that other public information may be required (e.g., the ALC and/or MULTOS hash); such additional information can be provided to the smart card as well by the OS loader 622. Once complete, optionally the printer 602 can transmit back to the data preparation system 606 a status indicator, which may indicate success in programming a particular smart card (e.g., success or failure).

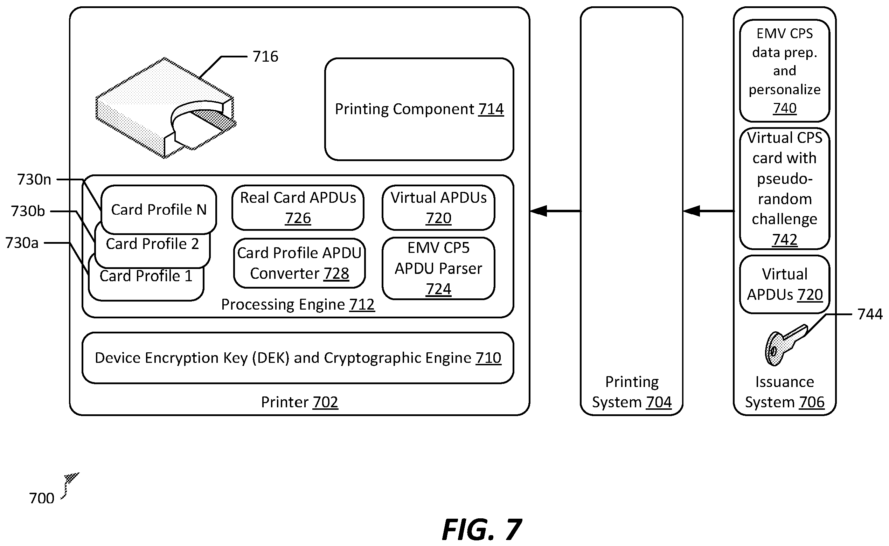

Fig. 7 illustrates a system 700 for secure personalization of a smart card using a second possible operating sequence, in this instance where an EMV application is personalized on a smart card. Generally, EMV applications can be personalized on smart cards that utilize any of a number of different smart card operation systems, including not only the MULTOS operating system as depicted in Fig. 6, but also a GlobalPlatform operating system or other proprietary operating systems. Personalization of EMV applications is specifically card-dependent, in that the personalization system must identify the card type and operating system and then select an appropriate method by which APDUs are generated for personalizing the EMV application on the smart card. Furthermore, EMV applications often require mutual authentication for personalization on a smart card, using a random challenge/response scheme between a personalization system and the card. As such, the generalized method described above in connection with Fig. 5 is a required, but incomplete, messaging sequence for EMV applications.

In the example shown in Fig. 7, a printer 702 capable of personalizing a smart card using an EMV application is communicatively connected to a printing system 704, which in turn is communicatively connected to an issuance system. As in Fig. 6, the printer 702 can be implemented using one or more of the printers 106 of Fig. 1, while the issuance system 706 can correspond, for example, to the personalization system 108. The printing system 704 can assist with coordinating printing and personalization activities, for example as card issuance computing system 104.

In the example shown, the issuance system 706 includes a data preparation and personalization component 740 that uses a virtual CPS card 742. The virtual CPS card 742 is used by the data preparation and personalization component 740 to precompute all APDUs 720 that are required for programming of a smart card. Those APDUs are generated based on mutual authentication with the virtual CPS card 742, as well as preparation of any EMV data required by the application.

A secure channel key 744 at the issuance system 706 is used to establish a secure communication channel between the issuance system 706 and printer 702. The secure channel key 744 can be either pre-shared between the printer 702 and the issuance system 706, or may be randomly generated at the issuance system 706 by the virtual CPS card 742. If the secure channel key 744 is obtained from the printer, it can be constructed as a device-specific encryption key. If the secure channel key 744 is generated by the virtual CPS card 742, it can be encrypted using a device encryption key obtained from the printer 702 (e.g., from cryptographic engine 710, which generally corresponds to cryptographic engine 610, described above). Accordingly, in either event, data transmitted between the issuance system 706 and printer 702 is encrypted by a device encryption key - in one possible instance, that data is the APDUs themselves (if the device encryption key is obtained from the printer before APDU generation), in which case the secure channel key 744 corresponds to the device encryption key. In another instance, the secure channel key is generated from the virtual CPS card 742, but the secure channel key 744 is itself encrypted by the device encryption key, and is transmitted to the printer alongside the APDUs in encrypted form so the printer can process the APDUs accordingly. The APDUs, after being created at the issuance system 706, are transmitted, in a single transaction, to the printer 702. If a device encryption key was used to encrypt the secure channel key, the single transaction can also include transmission of the virtual CPS card 742 as well as the secure channel key 744.

At the printer 702, a processing engine 712 queries an available smart card interfaced via the smart card personalization and programming device 716 to identify the card. The processing engine 712 will select a card profile from among a plurality of card profiles 730a-n, and trigger a card profile APDU converter 728 to convert the pre-computed APDUs 720 to real card APDUs 726, using an APDU parser 724. This can include, for example, performing one or more cryptographic calculations. In example embodiments, based on a selected card profile requiring certain information, the real card APDUs 726 may include less than all of the information included in the APDUs 720; additionally, APDUs 720 can in some instances be used to generate more than one set of real card APDUs 726.

Once the processing engine 712 successfully crease the real card APDUs 726 for a particular smart card, it can issue those APDUs using the smart card personalization and programming device 716, in accordance with the EMV Card Personalization Specification, available at https://www.emvco.com. The smart card personalization and programming device 716 may operate in sequence with the printing component 714 in a manner analogous to that described above with respect to similar components in Fig. 6. Additionally, once complete, optionally the printer 702 can transmit back to the issuance system 706 a status indicator, which may indicate success in programming a particular smart card (e.g., success or failure).

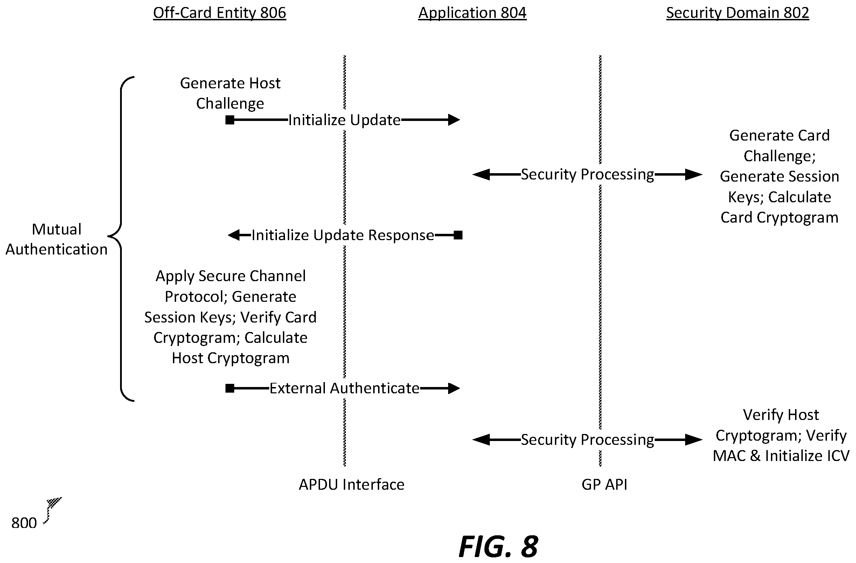

Referring now to Figs. 8-9, and example communication sequence and system for personalizing smart cards according to a third possible embodiment are shown. In a particular example, the communication sequence and system are particularly applicable to personalizing smart cards utilizing a GlobalPlatform card specification in a secured manner, allowing for remote, secure personalization according to the concepts described herein. By way of background, smart cards utilizing the GlobalPlatform card specification use security domains to perform card content management and personalization. Each security domain uses a secure channel protocol (SCP) defined in the GlobalPlatform card specification to provide secure communication between an off-card entity (e.g., a personalization system, such as personalization system 108) and a smart card. Generally, the SCP defines a first step of authenticating a card using authentication cryptograms that are based on an off-card challenge, card challenge, and session keys. The card challenge is a random or pseudo-random value generated by the smart card (based on an option defined in the SCP). If pseudo-random generation is not supported, the off-card application first most obtain a card challenge to calculate authentication cryptograms, and subsequently generate APDUs required for personalization. Accordingly, off-card entities, such as a personalization system, are not able to prepare APDUs in advance for personalization, preventing batch data preparation, and limiting the ability to remotely personalize GlobalPlatform cards over unreliable or slow networks.

GlobalPlatform-compliant smart cards have a runtime environment that hosts a security domain separated from applications (e.g., card issuer applications, application provider applications, etc.), which execute via an API layer between the runtime environment and the applications.

An illustration of a communication sequence 800 useable for authentication of a GlobalPlatform smart card is illustrated in Fig. 8. In that communication sequence 800, both the smart card (including an application 804 and security domain 802) and the off-card entity 806 (e.g., the personalization system 108) generate an authentication cryptogram (the host challenge and card challenge, respectively). The off-card entity verifies the card cryptogram and the smart card verifies the host cryptogram in the security domain 802. Session keys are used to secure communications between the off-card entity 806 and the smart card. Card and host cryptograms can be generated, for example, by concatenating a sequence counter, host challenge, and card challenge into a block; the card challenge can be generated as a random or pseudo-random number unique to a particular secure channel session.

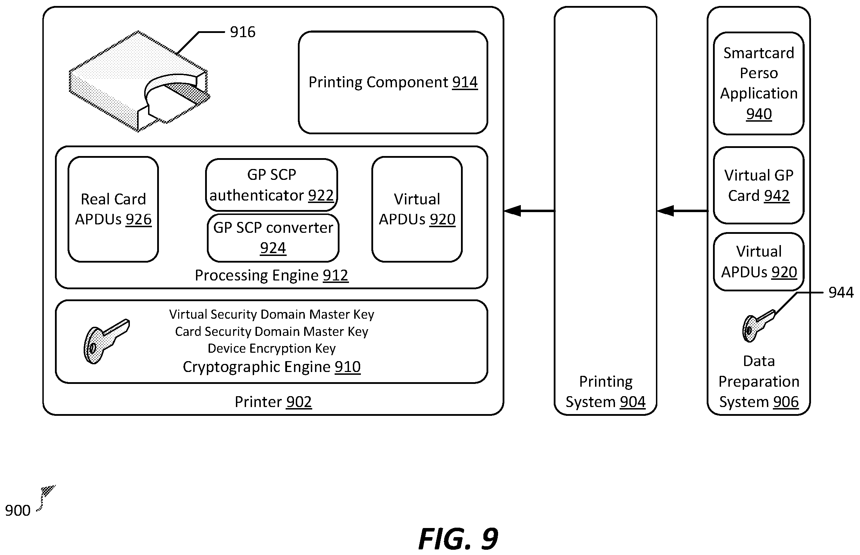

Because of the mutual authentication requirement of GlobalPlatform cards reflected in Fig. 8, a system constructed for secure GlobalPlatform-compliant personalization requires close cooperation of a smart card and personalization application. Accordingly, a system 900 for secure personalization of such cards is illustrated in Fig. 9, and represents a slight modification over the systems of Figs. 6-7. The system 900 includes a printer 902, printing system 904, and data preparation system 906. As in Fig. 6, the printer 902 can be implemented using one or more of the printers 106 of Fig. 1, while the data preparation system 906 can correspond, for example, to the personalization system 108. The printing system 904 can assist with coordinating printing and personalization activities, for example as card issuance computing system 104.

In the example shown, a smart card personalization application 940 and a virtual GlobalPlatform smart card 942 are stored at the data preparation system 906. The virtual GlobalPlatform smart card 942 implements the GlobalPlatform SCP, and optionally supports pseudo-random card challenge generation. The virtual GlobalPlatform smart card 942 shares a set of master keys 944 with the printer 902; as such, the master keys 944 of the virtual GlobalPlatform smart card 942 are selected such that they are unique to the printer 902, but are not the same master keys as would be used by the real GlobalPlatform smart card on which the personalized application is to be stored. In example embodiments, the master keys 944 can include a set of derived keys, for example using a device ID as the data from which the key is derived. Alternatively, a random set of SCP keys can be generated using a common card sequence counter (either shared or predefined), and those keys can be encrypted using a device encryption key that is specific to the printer 902. As such, similarly to the configuration for EMV applications in Fig. 7, either the master keys are printer-specific or are encrypted using printer-specific keys.

At the personalization system 906, the smart card personalization application 940 generates all of the APDUs that would be required for personalization using the virtual GlobalPlatform smart card 942, to form APDUs 920. The virtual GlobalPlatform smart card 942 stores all of the APDUs 920 that are generated, which are then transferred to the printer 902. This transfer can include the various personalization information reflected in the constructed APDUs. Those APDUs may be encrypted using either a device encryption key or secure channel keys; if encrypted using secure channel keys, those keys can also be transmitted to the printer 902, and are encrypted using a device encryption key. As such, at least a portion of the customized dataset to be sent to the printer 902 is encrypted using a device-specific key of the printer.

At the printer, after the APDUs 920 are received, each of the APDUs 920 is processed by the processing engine 912. If an APDU within the APDUs 920 matches a secure channel protocol (SCP) APDU defined for secure channel authentication, the GlobalPlatform SCP authenticator 922 is called by the smart card personalization and programming device 916 to generate a "real" secure channel session key and perform the authentication sequence of Fig. 8 with the real card, via the smart card personalization and programming device 916. Once the card is successfully authenticated, the GlobalPlatform SCP converter 924 converts the APDU from a virtual card APDU to a real card APDU, for example by reformatting the APDU by decrypting that APDU using the device encryption key and/or secure channel key, and re-encrypting the APDU using the "real" secure channel session key for transmission to and storage on the smart card. As with the prior-described arrangements, optionally the printer 902 can transmit back to the data preparation system 906 a status indicator, which may indicate success in programming a particular smart card (e.g., success or failure).

Referring to Fig. 9 generally, it is noted that the transformation of APDUs, and the key exchange process required for GlobalPlatform-compliant smart cards generally involves two authentication processes as described in conjunction with Fig. 8 - one between the data preparation system 906 and the virtual GlobalPlatform smart card 942, and a second between the printer 902 and the real GlobalPlatform smart card at the smart card personalization and programming device 916. This allows a complete dataset to be transmitted from the data preparation system 906 to the printer 902 in a single instance, and decouples timing of creation of APDUs from the timing at which those APDUs are transferred to the real GlobalPlatform smart card. Accordingly, similar advantages to those described herein can be realized.

This disclosure described some aspects of the present technology with reference to the accompanying drawings, in which only some of the possible aspects were shown. Other aspects can, however, be embodied in many different forms and should not be construed as limited to the aspects set forth herein. Rather, these aspects were provided so that this disclosure was thorough and complete and fully conveyed the scope of the possible aspects to those skilled in the art.

As should be appreciated, the various aspects (e.g., portions, components, etc.) described with respect to the figures herein are not intended to limit the systems and methods to the particular aspects described. Accordingly, additional configurations can be used to practice the methods and systems herein and/or some aspects described can be excluded without departing from the methods and systems disclosed herein.

Similarly, where steps of a process are disclosed, those steps are described for purposes of illustrating the present methods and systems and are not intended to limit the disclosure to a particular sequence of steps. For example, the steps can be performed in differing order, two or more steps can be performed concurrently, additional steps can be performed, and disclosed steps can be excluded without departing from the present disclosure.

Although specific aspects were described herein, the scope of the technology is not limited to those specific aspects. One skilled in the art will recognize other aspects or improvements that are within the scope of the present technology. Therefore, the specific structure, acts, or media are disclosed only as illustrative aspects. The scope of the technology is defined by the following claims and any equivalents therein.

## Claims

1. A method of personalizing a smart card, the method comprising:
generating (204), at a personalization system (108, 606, 706, 806), a customized dataset including personalization data of a particular user for installation onto a smart card by programming, the customized dataset being generated for use with an operating system of the smart card by performing a personalization process using a virtual smart card that is compatible and formatted according to the operating system without requiring a concurrent connection to a card issuance device, the personalization data including account details associated with the smart card;
encrypting (208) the personalization data, at the personalization system, using an encryption key that is unique to a card issuance device that is separate from the personalization system, the encryption key being different from any encryption key used to secure the customized dataset when stored on the smart card;
transmitting (210) the virtual smart card including the customized dataset to the card issuance device; and
programming, by the card issuance device, the personalization data onto the smart card by performing a personalyzation process.

2. The method of claim 1, wherein the encryption key comprises a public key of a public-private key pair, wherein a private key of the public-private key pair is maintained at the card issuance device or a key repository.

3. The method of claim 1, wherein the customized dataset comprises a personalized virtual smart card.

4. The method of claim 1, wherein the card issuance device comprises at least one of a card printer associated with a physical smart card or a mobile device onto which an electronic smart card is installed.

5. The method of claim 2, wherein the customized dataset comprises a plurality of Application Protocol Data Units (APDUs), and wherein encrypting the personalization data further comprises encrypting at least one or more secure channel keys used in generating the customized dataset.

6. The method of claim 1, wherein the customized dataset is generated entirely prior to transmitting any portion of the customized dataset to the card issuance device.

7. The method of claim 1, further comprising, at the card issuance device:
decrypting the encrypted personalization data received at the card issuance device using a key specific to the card issuance device;
based on the customized dataset, personalizing the smart card using a secured communication session established using one or more encryption keys of the smart card.

8. The method of claim 1, wherein the encrypted personalization data is included in one or more virtual application programming data units (APDUs) created using an encryption key of a virtual smart card, and wherein generation of the customized dataset includes performing mutual authentication with the virtual smart card.

9. A secure end-to-end smart card personalization system (100, 400, 600, 700, 900) comprising:
a personalization system (108, 400, 606, 706, 806) comprising a programmable circuit communicatively connected to a memory storing computer executable instructions which, when executed, cause the personalization system to perform the method according to claim 1.

10. The secure end-to-end smart card personalization system of claim 9, wherein the customized dataset comprises an application load unit.

11. The secure end-to-end smart card personalization system of claim 9, wherein the customized dataset comprises a plurality of application programming data units (APDUs), and wherein the customized dataset further comprises one or more session keys.

12. The secure end-to-end smart card personalization system of claim 11, further comprising:
a card issuance device communicatively connected to the personalization system; and
a card issuance computing system communicatively connected between the card issuance device and the personalization system, wherein the card issuance computing system is local to the card issuance device and is communicatively connected to the personalization system via the Internet.

13. The secure end-to-end smart card personalization system of claim 12, wherein the card issuance device comprises a smart card printer, and wherein the personalization system is located remotely from the card issuance device.

## Patentansprüche

1. Verfahren zur Personalisierung einer Chipkarte, das Verfahren umfassend:
Erzeugen (204), in einem Personalisierungssystem (108, 606, 706, 806), eines benutzerdefinierten Datensatzes enthaltend Personalisierungsdaten eines bestimmten Benutzers zur Installation auf einer Chipkarte durch Programmierung, wobei der benutzerdefinierte Datensatz zur Verwendung mit einem Betriebssystem der Chipkarte erzeugt wird, indem ein Personalisierungsprozess durch Verwenden einer virtuellen Chipkarte durchgeführt wird, die mit dem Betriebssystem kompatibel ist und nach dem Betriebssystem formatiert wird, ohne eine gleichzeitige Verbindung mit einer Kartenausgabevorrichtung zu fordern, wobei die Personalisierungsdaten Accountdaten umfassen, die der Chipkarte zugeordnet sind;
Verschlüsseln (208), an einem Personalisierungssystem, der Personalisierungsdaten durch Verwenden eines Verschlüsselungsschlüssels, der eindeutig für eine Kartenausgabevorrichtung ist, die von dem Personalisierungssytem getrennt ist, wobei sich der Verschlüsselungsschlüssel von jedem Verschlüsselungsschlüssel unterscheidet, der zum Sichern des benutzerdefinierten Datensatzes verwendet wird, wenn er auf der Chipkarte gespeichert wird;
Übertragen (210) der virtuellen Chipkarte enthaltend den benutzerdefinierten Datensatz an die Kartenausgabevorrichtung; und
Programmieren, durch die Kartenausgabevorrichtung, der Personalisierungsdaten auf die Chipkarte durch Durchführen eines Personalisierungsprozesses.

2. Verfahren nach Anspruch 1, wobei der Verschlüsselungsschlüssel einen öffentlichen Schlüssel eines öffentlichen-privaten Schlüsselpaares umfasst, wobei ein privater Schlüssel des öffentlichen-privaten Schlüsselpaares in der Kartenausgabevorrichtung oder in einem Schlüsselspeicherplatz aufbewahrt wird.

3. Verfahren nach Anspruch 1, wobei der benutzerdefinierte Datensatz eine personalisierte virtuelle Chipkarte umfasst.

4. Verfahren nach Anspruch 1, wobei die Kartenausgabevorrichtung mindestens eines der folgenden umfasst: einen Kartendrucker, der einer physischen Chipkarte zugeordnet ist, oder eine mobile Vorrichtung, auf der eine elektronische Chipkarte installiert ist.

5. Verfahren nach Anspruch 2, wobei der benutzerdefinierte Datensatz eine Vielzahl von Applikationsprotokoll-Dateneinheiten (APDU) umfasst, und wobei das Verschlüsseln der Personalisierungsdaten ferner das Verschlüsseln von mindestens einem oder mehreren sicheren Kanalschlüsseln umfasst, die bei der Erzeugung des benutzerdefinierten Datensatzes verwendet werden.

6. Verfahren nach Anspruch 1, wobei der benutzerdefinierte Datensatz vollständig erzeugt wird, bevor ein beliebiger Abschnitt des benutzerdefinierten Datensatzes an die Kartenausgabevorrichtung übertragen wird.

7. Verfahren nach Anspruch 1, ferner umfassend, an der Kartenausgabevorrichtung:
Entschlüsseln der verschlüsselten Personalisierungsdaten, die an der Kartenausgabevorrichtung empfangen werden, durch Verwenden eines Schlüssels, der für die Kartenausgabevorrichtung spezifisch ist;
Personalisieren der Chipkarte basierend auf dem benutzerdefinierten Datensatz durch Verwenden einer gesicherten Kommunikationssitzung, die durch Verwenden eines oder mehreren Verschlüsselungsschlüssel der Chipkarte festgelegt wird.

8. Verfahren nach Anspruch 1, wobei die verschlüsselten Personalisierungsdaten in einer oder mehreren virtuellen Applikationsprogrammierung-Dateneinheiten (APDU) enthalten sind, die durch Verwenden eines Verschlüsselungsschlüssels einer virtuellen Chipkarte erstellt werden, und wobei die Erzeugung des benutzerdefinierten Datensatzes das Durchführen einer gegenseitigen Authentifizierung mit der virtuellen Chipkarte umfasst.

9. Sicheres End-zu-End-Personalisierungssystem für Chipkarten (100, 400, 600, 700, 900), umfassend:
ein Personalisierungssystem (108, 400, 606, 706, 806) umfassend eine programmierbare Schaltung, die mit einem Speicher kommunikativ verbunden ist, der computerausführbare Anweisungen speichert, die, wenn sie ausgeführt werden, das Personalisierungssystem veranlassen, das Verfahren nach Anspruch 1 durchzuführen.

10. Sicheres End-zu-End-Personalisierungssystem für Chipkarten nach Anspruch 9, wobei der benutzerdefinierte Datensatz eine Applikationladeneinheit umfasst.

11. Sicheres End-zu-End-Personalisierungssystem für Chipkarten nach Anspruch 9, wobei der benutzerdefinierte Datensatz eine Vielzahl von Applikationsprogrammierung-Dateneinheiten (APDU) umfasst und wobei der benutzerdefinierte Datensatz ferner eine oder mehrere Sitzungsschlüssel umfasst.

12. Sicheres End-zu-End-Personalisierungssystem für Chipkarten nach Anspruch 11, ferner umfassend:
eine Kartenausgabevorrichtung, die mit dem Personalisierungssystem kommunikativ verbunden ist; und
ein Kartenausgabe-Computersystem, das zwischen der Kartenausgabevorrichtung und dem Personalisierungssystem kommunikativ verbunden ist, wobei sich das Kartenausgabe-Computersystem in der Nähe der Kartenausgabevorrichtung befindet und über Internet mit dem Personalisierungssystem kommuniziert.

13. Sicheres End-zu-End-Personalisierungssystem für Chipkarten nach Anspruch 12, wobei die Kartenausgabevorrichtung einen Chipkartendrucker umfasst und sich das Personalisierungssystem von der Kartenausgabevorrichtung entfernt ist.

## Revendications

1. Procédé de personnalisation d'une carte à puce, ledit procédé comprenant :
la génération (204), au niveau d'un système de personnalisation (108, 606, 706, 806), d'un jeu de données personnalisé comprenant des données de personnalisation d'un utilisateur particulier pour installation sur une carte à puce par programmation, ledit jeu de données personnalisé étant généré pour être utilisé avec un système d'exploitation de la carte à puce en exécutant un processus de personnalisation à l'aide d'une carte à puce virtuelle qui est compatible et formatée conformément au système d'exploitation sans nécessiter de connexion simultanée à un dispositif d'émission de carte, les données de personnalisation comprenant des informations de compte associées à la carte à puce ;
le chiffrement (208) des données de personnalisation, au niveau du système de personnalisation, à l'aide d'une clé de chiffrement qui est propre à un dispositif d'émission de carte distinct du système de personnalisation, ladite clé de chiffrement étant différente de toute clé de chiffrement utilisée pour sécuriser le jeu de données personnalisé lorsqu'il est stocké sur la carte à puce ;
la transmission (210) de la carte à puce virtuelle comprenant le jeu de données personnalisé au dispositif d'émission de carte ; et
la programmation, par le dispositif d'émission de carte, des données de personnalisation sur la carte à puce par exécution d'un processus de personnalisation.

2. Procédé selon la revendication 1, dans lequel la clé de chiffrement comprend une clé publique d'une paire de clés publique-privée, dans lequel une clé privée de la paire de clés publique-privée est conservée au niveau du dispositif d'émission de carte ou d'un dépôt de clés.

3. Procédé selon la revendication 1, dans lequel le jeu de données personnalisé comprend une carte à puce virtuelle personnalisée.

4. Procédé selon la revendication 1, dans lequel le dispositif d'émission de carte comprend au moins l'un parmi une imprimante de cartes associée à une carte à puce physique ou un dispositif mobile sur lequel une carte à puce électronique est installée.

5. Procédé selon la revendication 2, dans lequel le jeu de données personnalisé comprend une pluralité d'unités de données de protocole d'application (APDU), et dans lequel le chiffrement des données de personnalisation comprend en outre le chiffrement d'au moins une ou plusieurs clés de canal sécurisé utilisées pour générer le jeu de données personnalisé.

6. Procédé selon la revendication 1, dans lequel le jeu de données personnalisé est généré intégralement avant la transmission d'une quelconque partie du jeu de données personnalisé au dispositif d'émission de carte.

7. Procédé selon la revendication 1, comprenant en outre, au niveau du dispositif d'émission de carte :
le déchiffrement des données de personnalisation chiffrées reçues au niveau du dispositif d'émission de carte à l'aide d'une clé spécifique audit dispositif d'émission de carte ;
sur la base du jeu de données personnalisé, la personnalisation de la carte à puce à l'aide d'une session de communication sécurisée établie à l'aide d'une ou plusieurs clés de chiffrement de la carte à puce.

8. Procédé selon la revendication 1, dans lequel les données de personnalisation chiffrées sont incluses dans une ou plusieurs unités de données de programmation d'application virtuelle (APDU) créées à l'aide d'une clé de chiffrement d'une carte à puce virtuelle, et dans lequel la génération du jeu de données personnalisé comprend l'exécution d'une authentification mutuelle avec la carte à puce virtuelle.

9. Système de personnalisation sécurisée de bout en bout de carte à puce (100, 400, 600, 700, 900), comprenant :
un système de personnalisation (108, 400, 606, 706, 806) comprenant un circuit programmable connecté en communication à une mémoire stockant des instructions exécutables par ordinateur qui, lorsqu'elles sont exécutées, amènent le système de personnalisation à exécuter le procédé selon la revendication 1.

10. Système de personnalisation sécurisée de bout en bout de carte à puce selon la revendication 9, dans lequel le jeu de données personnalisé comprend une unité de chargement d'application.

11. Système de personnalisation sécurisée de bout en bout de carte à puce selon la revendication 9, dans lequel le jeu de données personnalisé comprend une pluralité d'unités de données de programmation d'application (APDU), et dans lequel le jeu de données personnalisé comprend en outre une ou plusieurs clés de session.

12. Système de personnalisation sécurisée de bout en bout de carte à puce selon la revendication 11, comprenant en outre :
un dispositif d'émission de carte connecté en communication au système de personnalisation ; et
un système informatique d'émission de carte connecté en communication entre le dispositif d'émission de carte et le système de personnalisation, dans lequel le système informatique d'émission de carte est local au dispositif d'émission de carte et est connecté en communication au système de personnalisation via Internet.

13. Système de personnalisation sécurisée de bout en bout de carte à puce selon la revendication 12, dans lequel le dispositif d'émission de carte comprend une imprimante de cartes à puce, et dans lequel le système de personnalisation est situé à distance du dispositif d'émission de carte.
